# EUROPÄISCHE PATENTSCHRIFT

(11) **EP 3 113 960 B1**
(45) Veröffentlichungstag und Bekanntmachung des Hinweises auf die Patenterteilung: **01.05.2019**
(21) Anmeldenummer: 15707362.8
(22) Anmeldetag: 02.03.2015
(51) Int. Cl.: B60B 3/14, F16B 5/02, F16B 41/00, B60B 3/16

(54) **BEFESTIGUNGSELEMENT**
FASTENING ELEMENT
ÉLÉMENT DE FIXATION

(30) Priorität: 03.03.2014 DE 102014203802
(43) Veröffentlichungstag der Anmeldung: 11.01.2017
(73) Patentinhaber: Berrang Entwicklungs GmbH, 68229 Mannheim (DE)
(72) Erfinder: HERMES, Joachim, 68519 Viernheim (DE)
(74) Vertreter: Herzog, Fiesser & Partner Patentanwälte PartG mbB
(86) Internationale Anmeldenummer: PCT/EP2015/054262
(87) Internationale Veröffentlichungsnummer: WO 2015/132184

(56) Entgegenhaltungen:
- WO-A1-2007/068222
- WO-A1-2007/068937
- FR-A- 634 341
- GB-A- 1 331 460
- US-A- 3 421 563
- US-A- 3 508 774
- US-A- 4 977 663

## Beschreibung

### Gebiet der Erfindung

Die Erfindung betrifft ein Befestigungselement zum Aufschrauben auf ein Gewinde. Das Befestigungselement kann insbesondere als Radmutter ausgestaltet sein. Weiterhin betrifft die Erfindung ein Verfahren zum Befestigen eines Rades an einem Fahrzeug, insbesondere an einem Kraftfahrzeug oder einem Anhänger. Das erfindungsgemäße Befestigungselement und das erfindungsgemäße Verfahren können insbesondere eingesetzt werden, um ein oder mehrere Räder an einem Radträger eines Fahrzeugs zu befestigen. Bei dem Fahrzeug kann es sich insbesondere um ein Kraftfahrzeug handeln, vorzugsweise um ein Nutzfahrzeug, eine Baumaschine, eine Landmaschine oder einen Anhänger. Auch andere Einsatzgebiete sind grundsätzlich möglich.

### Stand der Technik

Aus dem Stand der Technik ist eine Vielzahl von Befestigungselementen bekannt, beispielsweise in Form von Schrauben-Mutter-Verbindungen. Insbesondere sind Befestigungselemente aus dem Bereich der Kraftfahrzeugtechnik für eine Radbefestigung bekannt.

So sind beispielsweise im Stand der Technik Radbefestigungen mittels Schrauben oder Bolzen und Muttern beschrieben. Beispielsweise beschreibt DE 25 08 057 A1 eine Radbefestigung mit einem Bolzen und einer Mutter, insbesondere für ein Fahrzeugrad mit einem ebenen Radscheibenspiegel. Die Radbefestigung ist derart ausgestaltet, dass der Radbolzen als elastische Schraube ausgebildet ist und die Radmutter einen Schaft mit Zentrierfläche und einem Kragen mit Anschlagfläche aufweist.

Auch andere Ausgestaltungen von Radschrauben sind aus dem Stand der Technik bekannt. So beschreiben beispielsweise US 1,928,068, EP 1 849 624 A1 oder EP 0 836 016 A2 verschiedene Arten von Radschrauben, welche jeweils einen Stützring aufweisen. Auch EP 0 989 311 A1 beschreibt ein Verschraubungsteil, umfassend eine Mutter sowie eine daraus hergestellte Verschraubung.

Weiterhin sind aus dem Stand der Technik im Bereich der Radbefestigungen zahlreiche Formen von Radmuttern oder andere Arten von Verbindungselementen bekannt. Diesbezüglich kann beispielsweise auf DE 603 11 732 T2, EP 0 370 212 A1, DE 196 55 355 B4, US 4,654,913 oder FR 876408 verwiesen werden. In vielen Fällen weisen diese Radmuttern zusätzlich einen so genannten Drehteller, Druckteller oder Druckring auf, welcher auf der Radmutter drehbar gelagert ist. Exemplarisch kann diesbezüglich auf EP 1 207 313 A1, EP 0 643 232 A2, US 4,986,712, GB 2 051 285 A, US 4,717,299, DE 199 56 287 A1, WO 2005/098246 A1, US 4,971,498, US 5,597,279, EP 0 004 185 A1, DE 7210833 U, WO 03/093683 A2 oder EP 0 131 739 A1 verwiesen werden. Mehrere der genannten Dokumente betreffen eine Befestigung des Drucktellers an der Radmutter. Beispielsweise kann die Radmutter eine durch Kaltumformen erzeugte Nut aufweisen, in welche der Drehteller verliersicher eingefügt ist.

In GB 1 331 460 A wird eine vormontierte Befestigungseinheit beschrieben, insbesondere zur Verwendung in der Flugzeugindustrie. Die Befestigungseinheit weist eine Mutter auf, welche einen oberen Bereich mit einem Gewinde und einen von dem oberen Bereich sich verbreiternden unteren Bereich mit einer Zentrierbohrung umfasst. Weiter weist die Befestigungseinheit eine unverlierbare, geflanschte Unterlegscheibe auf.

In US 3 421 563 A wird eine Befestigungseinheit beschrieben, welche einen männlichen Teil und eine Mutter-Einheit umfasst. Der männliche Teil weist einen zylindrischen Schaft, einen Kopf und einen Gewindeteil auf. Die Mutter-Einheit umfasst eine vormontierte Einheit mit einem Körper, welcher einen Bereich mit einer Gewindebohrung und einen sich von diesem Bereich verbreiternden Bereich mit einer Zentrierbohrung aufweist. Weiter umfasst die Mutter-Einheit eine deformierbare, geflanschte Unterlegscheibe.

US 3 508 774 A beschreibt eine Baugruppe mit einer Mutter, welche einen Bereich mit einer Gewindebohrung und einen sich von diesem Bereich verbreiternden Bereich mit einer Zentrierbohrung aufweist.

Die aus dem Stand der Technik bekannten Befestigungselemente der genannten Art weisen jedoch in der Praxis insbesondere bei der Befestigung großer Räder, wie beispielsweise im Nutzfahrzeugbereich, im Baumaschinenbereich oder im Landmaschinenbereich, mehrere Nachteile auf. Beispielsweise sind zahlreiche der bekannten Befestigungselemente nicht für eine reversible Montage geeignet, wie sie insbesondere bei der Radbefestigung zwingend erforderlich ist. So ist das in US 3 421 563 A beschriebene Sicherungselement mit einer permanenten Deformation einer Unterlagscheibe verbunden, die zwar eine dauerhafte Sicherung gewährleisten mag, die einer reversiblen Verwendung jedoch im Wege steht.

Weiterhin werden insbesondere im Bereich der Nutzfahrzeuge große Schrauben und Muttern verwendet, bei deren Verschraubung starke Axialkräfte auftreten. Bei der Verbindung sind entsprechende Vorspannkräfte erforderlich, die üblicherweise über Zusatzelemente aufgenommen werden. So können beispielsweise Distanzscheiben oder Distanzhülsen verwendet werden, um eine erforderliche Dehnlänge aufzunehmen. Nachteilig an derartigen Konstruktionen ist jedoch, dass die durch diese Elemente bedingte Montage in der Praxis aufwändig ist. So ist eine Lagerhaltung und Montage mehrerer Elemente erforderlich. Weiterhin treten zwischen den einzelnen Elementen der Verschraubung Trennfugen auf, welche verschmutzen können und welche ein Eindringen von Feuchtigkeit sowie eine Korrosion begünstigen können oder welche zu Setzerscheinungen führen können.

### Aufgabe der Erfindung

Es ist dementsprechend eine Aufgabe der vorliegenden Erfindung, ein Befestigungselement sowie ein Verfahren zum Befestigen eines Rades an einem Fahrzeug bereitzustellen, welche die Nachteile bekannter Befestigungselemente und Verfahren der genannten Art zumindest weitgehend vermeiden. Insbesondere sollen Befestigungselemente bereitgestellt werden, welche für die Befestigung großer Räder, insbesondere im Bereich der Nutzfahrzeuge, der Baumaschinen und der Landmaschinen, geeignet sind und welche einfach zu handhaben und dennoch robust ausgestaltet sind.

### Offenbarung der Erfindung

Diese Aufgabe wird gelöst durch ein Befestigungselement und ein Verfahren zum Befestigen eines Rades an einem Fahrzeug, mit den Merkmalen der unabhängigen Patentansprüche. Vorteilhafte Weiterbildungen, welche einzeln oder in beliebiger Kombination realisierbar sind, sind in den abhängigen Ansprüchen dargestellt.

Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben den durch diese Begriffe eingeführten Merkmalen, keine weiteren Merkmale vorhanden sind, oder auf Situationen, in welchen ein oder mehrere weitere Merkmale vorhanden sind. Beispielsweise kann sich der Ausdruck "A hat B", "A weist B auf', "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Weiterhin werden im Folgenden die Begriffe "vorzugsweise", "insbesondere", "beispielsweise" oder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform der Erfindung" oder durch "in einem Ausführungsbeispiel der Erfindung" eingeleitet werden, als optionale Merkmale verstanden, ohne dass hierdurch alternative Ausgestaltungen oder der Schutzumfang der unabhängigen Ansprüche eingeschränkt werden sollen. Weiterhin sollen durch diese einleitenden Ausdrücke sämtliche Möglichkeiten, die hierdurch eingeleiteten Merkmale mit anderen Merkmalen zu kombinieren, seien es optionale oder nicht-optionale Merkmale, unangetastet bleiben.

In einem ersten Aspekt der vorliegenden Erfindung wird ein Befestigungselement zum Aufschrauben auf ein Gewinde vorgeschlagen. Unter einem Befestigungselement ist dabei allgemein ein beliebiges Element zu verstehen, welches auf einem Gewinde, beispielsweise einer Schraube oder einer Gewindestange, aufschraubbar ist. Insbesondere kann das Befestigungselement ganz oder teilweise als Mutter ausgestaltet sein, insbesondere als Radmutter, welche auf Stehbolzen oder Radschrauben eines Radträgers eines Fahrzeugs, insbesondere eines Kraftfahrzeugs und/oder eines Anhängers, aufschraubbar ist.

Das Befestigungselement umfasst eine Mutter mit einem Innengewinde. Unter einer Mutter ist dabei allgemein ein Befestigungselement oder ein Teil eines Befestigungselements zu verstehen, welches auf ein Außengewinde aufschraubbar ist. Beispielsweise kann die Mutter eine zylindrische Gestalt aufweisen, mit einer zentralen Bohrung und einem Innengewinde. Die Bohrung kann eine Durchgangsbohrung oder auch eine Blindbohrung oder Sacklochbohrung sein, wobei Letztere beispielsweise an einem der unten genannten Dehnhülse gegenüberliegenden Ende des Innengewindes geschlossen ausgestaltet sein kann. Wie unten noch näher ausgeführt wird, kann die Mutter insbesondere eine Außenkontur aufweisen, an welcher ein Werkzeug angesetzt werden kann, beispielsweise ein Außensechskant. Auch andere Ausgestaltungen sind jedoch grundsätzlich möglich.

Das Befestigungselement umfasst weiterhin eine sich an die Mutter axial anschließende Dehnhülse, wobei die Dehnhülse Innengewinde-frei ausgestaltet ist und einstückig mit der Mutter ausgebildet ist. Unter einer Dehnhülse ist dabei allgemein im Rahmen der vorliegenden Erfindung ein Element zu verstehen, welches eingerichtet ist, um axiale Kräfte während einer Verschraubung der Mutter mit einem Gegenstück aufzunehmen. Die Dehnhülse kann dementsprechend eine Elastizität aufweisen. Die Dehnhülse kann, wie unten noch näher ausgeführt wird, insbesondere als zylindrische Hülse ausgestaltet sein, vorzugsweise als kreiszylindrische Hülse, vorzugsweise als zylindrische Hülse mit einer zumindest abschnittsweise konstanten Wandstärke.

Unter einer einstückigen Ausbildung der Dehnhülse mit der Mutter ist allgemein eine Ausgestaltung zu verstehen, bei welcher die Mutter und die Dehnhülse als durchgängiges Element ausgebildet sind. Insbesondere kann die Dehnhülse aus demselben Material bestehen, aus welchem auch die Mutter hergestellt ist, und/oder die Mutter und die Dehnhülse können in ein und demselben Fertigungsschritt hergestellt werden. Die Dehnhülse und die Mutter können somit einen gemeinsamen Grundkörper bilden, welcher als einzelnes, einstückiges Bauteil gehandhabt und hergestellt werden kann. Die Dehnhülse kann insbesondere derart mit der Mutter einstückig verbunden sein, dass eine Drehung und/oder Verschiebung der Dehnhülse gegenüber der Mutter, zumindest unter im üblichen Einsatz auftretenden Kräften, makroskopisch nicht möglich ist.

Das Befestigungselement umfasst weiterhin mindestens einen Druckteller. Unter einem Druckteller, auch als Drehteller oder Druckring oder Drehring oder Auflageteller zu bezeichnen, ist allgemein ein ringförmiges Element zu verstehen, welches beim Aufschrauben des Befestigungselements auf das Gewinde mit einem Gegenlager zur Auflage kommen kann und dabei beim Aufschrauben auf das Gewinde einen Gegendruck aufbauen kann. Auf diese Weise kann beispielsweise eine Verliersicherung gewährleistet werden. Erfindungsgemäß weist der Druckteller in einer axialen Schnittebene parallel zu einer Achse des Befestigungselements einen konischen Verlauf oder einen gekrümmten Verlauf auf, wobei sich ein Querschnitt des Drucktellers in einer axialen, von der Mutter weg weisenden Richtung kontinuierlich oder stufenweise erweitert. Hierdurch lässt sich eine Verliersicherheit des Befestigungselements deutlich erhöhen, im Gegensatz beispielsweise zu den sich verjüngenden oder verformbaren Unterlegscheiben der GB 1 331 460 A, der US 3 421 563 A oder der US 3 508 774 A. Der Druckteller kann sich also insbesondere tellerförmig von der Mutter weg weisend erweitern und kann somit beispielsweise eine möglichst breite Auflagefläche bieten, welche insbesondere auch breiter oder mit größerem Außendurchmesser ausgestaltet sein kann als die Dehnhülse. Eine durch den Druckteller bedingte Federwirkung kann insbesondere auch zu einer länger anhaltenden Vorspannung führen als herkömmliche Unterlagscheiben.

Der Druckteller ist auf einer der Mutter abgewandten Seite der Dehnhülse angeordnet und ist drehbar verliersicher an der Dehnhülse befestigt. Unter einer drehbaren Befestigung ist allgemein eine Befestigung zu verstehen, bei welcher sich der Druckteller gegenüber der Dehnhülse drehen kann, beispielsweise um eine Achse des Befestigungselements. Unter einer verliersicheren Befestigung des Drucktellers an der Dehnhülse kann allgemein eine Befestigung verstanden werden, bei welcher, zumindest ohne Verformung der Dehnhülse und/oder des Drucktellers, der Druckteller, zumindest unter üblichen, im Einsatz auftretenden Kräften, nicht von der Dehnhülse getrennt werden kann. Insbesondere kann der Druckteller, wie unten noch näher ausgeführt wird, mittels einer Bördelung oder Crimpung im Druckteller und/oder in der Dehnhülse verliersicher an der Dehnhülse befestigt sein. Die Bördelung oder Crimpung kann beispielsweise durch eine Kaltverformung, durch ein Kaltfließpressen oder eine Pressung hergestellt werden.

Das Befestigungselement weist gegenüber bekannten Befestigungselementen der genannten Art eine Vielzahl an Vorteilen auf. So kann das Befestigungselement insbesondere als Radmutter, beispielsweise als Kombi-Dehnradmutter, ausgestaltet sein. Das Befestigungselement kann insbesondere für eine Verschraubung von großen Rädern und/oder großen Felgen eingesetzt werden, mit großen Durchmessern. Bei derartigen großen Rädern bzw. Felgen treten aufgrund der großen Hebelarmwirkung in der Regel exzentrische Belastungen in dem Befestigungselement, beispielsweise in der Schraube, auf. Dies ist beispielsweise bei Traktoren der Fall, da diese Fahrzeuge über sehr große Räder verfügen. Die enorme Biegewechselwirkung, die durch die große Beanspruchung hervorgerufen wird, kann aufgefangen werden, indem erfindungsgemäß zwischen dem Druckteller und der Mutter die Dehnhülse eingefügt wird, welche einstückig mit der Mutter ausgestaltet wird. Auf diese Weise kann das Befestigungselement möglichst lang ausgestaltet werden, so dass hierdurch ein entsprechend großer Dehnungsbereich entsteht.

Im Gegensatz zu den bislang verwendeten Distanzringen, die aufgrund ihrer Dicke für eine künstliche Verlängerung der Radschraube sorgen und somit eine elastische Nachgiebigkeit sowie ein elastisches Biegeverhalten der Schraube beeinflussen, ist das erfindungsgemäß vorgeschlagene Befestigungselement hinsichtlich der Mutter und der Dehnhülse einstückig ausgebildet. Die Dehnhülse kann von ihrer Höhe her derart ausgeführt sein, dass sie in ihrem inneren Bereich eine entsprechende Dehnlänge für die Verschraubung bietet. So kann das Befestigungselement, welches auch als Dehnradmutter oder Kombi-Dehnradmutter bezeichnet werden kann, im Prinzip eine Radmutter mit einer Hülse kombinieren, welche die Dehnlänge für eine Radschraube bereitstellen kann. Die Radmutter kann ansonsten insbesondere nach entsprechenden Normen ausgestaltet sein, beispielsweise entsprechend DIN 74361. Am gegenüberliegenden Ende, also auf dem der Mutter abgewandten Ende der Dehnhülse, ist der Druckteller drehbar mit der Dehnhülse verbunden, so dass ein zusammengesetztes Bauteil entsteht. Der Druckteller wird drehbar gestaltet, damit beispielsweise beim Aufschrauben und/oder Einschrauben der Dehnradmutter eine Auflagefläche zwischen dem Befestigungselement und einem entsprechenden Gegenlager nicht durch eine Drehbewegung beschädigt wird.

Das vorgeschlagene Befestigungselement ist aufgrund der einstückigen Ausgestaltung der Dehnhülse mit der Mutter und aufgrund der verliersicheren Befestigung des Drucktellers an der Dehnhülse einfach zu handhaben, da bei der Montage ein zusätzliches Aufbringen eines Distanzstücks und/oder einer Distanzhülse nicht mehr erforderlich ist. Zudem lassen sich auf diese Weise auch die Lagerhaltung und die Fertigung des Befestigungselements vereinfachen. Aufgrund der einstückigen Ausgestaltung der Dehnhülse und der Mutter sowie der dadurch möglichen Vermeidung einer Fuge zwischen Mutter und Dehnhülse lassen sich zudem Verschmutzungen und Korrosion im Übergangsbereich zwischen Mutter und Dehnhülse wirksam vermeiden. Des Weiteren wird das Setzverhalten reduziert.

Das Befestigungselement kann auf verschiedene Weisen vorteilhaft weiter ausgestaltet werden. So kann, wie oben ausgeführt, die Mutter insbesondere eine Außenkontur aufweisen, die ein Ansetzen eines Werkzeugs an die Mutter ermöglicht. Insbesondere kann die Mutter eine Außenkontur mit ebenen Flächen aufweisen, insbesondere einen Außensechskant. Auch andere Ausgestaltungen sind grundsätzlich möglich, beispielsweise eine Außenkontur mit Rillen und/oder Nuten oder ein Außensechsrund zum Ansetzen eines Werkzeugs.

Die Dehnhülse kann, wie oben ausgeführt, ganz oder teilweise kreiszylindrisch ausgestaltet sein. Insbesondere kann die Dehnhülse zumindest abschnittsweise eine kreiszylindrische Mantelfläche aufweisen. An einem Übergang zwischen der Distanzhülse und der Mutter kann ein Übergangsbereich ausgebildet sein, welcher beispielsweise eine Schulter aufweisen kann. Auch eine glatte, übergangsfreie Ausgestaltung ist jedoch möglich.

Das Befestigungselement kann insbesondere mit dem Druckteller auf eine ebene Fläche aufsetzbar sein, beispielsweise eine ebene Fläche eines Gegenlagers. Beispielsweise kann es sich bei dieser ebenen Fläche um eine Felge eines Rades handeln. Das Befestigungselement ist dabei vorzugsweise derart ausgestaltet, dass die Dehnhülse die ebene Fläche nicht berührt, so dass das Befestigungselement ausschließlich über den Druckteller mit der ebenen Fläche in Berührung gerät.

Weitere mögliche Ausgestaltungen betreffen die Befestigung des Drucktellers an der Dehnhülse. So kann der Druckteller, wie oben ausgeführt, insbesondere durch mindestens eine Bördelung mit der Dehnhülse verbunden sein. Unter einer Bördelung ist dabei allgemein im Rahmen der vorliegenden Erfindung eine formschlüssige Verbindung zu verstehen, bei welcher ein Teil der Dehnhülse und/oder ein Teil des Drucktellers derart umgebogen sind, dass die Dehnhülse und der Druckteller ineinander greifen und, zumindest ohne weitere Verformung des Drucktellers und/oder der Dehnhülse, nicht mehr voneinander trennbar sind. Gleichzeitig kann die Bördelung, welche beispielsweise einen umlaufenden, umgebogenen Rand der Dehnhülse und/oder des Drucktellers umfassen kann, für eine Drehbarkeit des Drucktellers auf der Dehnhülse sorgen.

Die Dehnhülse kann insbesondere eine Länge entlang einer Achse des Befestigungselements aufweisen, welche mindestens das 0,5-fache einer Länge des Innengewindes der Mutter entlang der Achse beträgt, beispielsweise mindestens das 1,0-fache. Unter einer Länge der Dehnhülse kann beispielsweise eine Länge in axialer Richtung verstanden werden, welche auf der Seite der Mutter ab dem Ende des Innengewindes bis hin zu einem entgegengesetzten Ende der Dehnhülse gemessen wird, beispielsweise einem äußersten Ende auf der der Mutter abgewandten Seite der Dehnhülse. Alternativ kann jedoch auf der der Mutter zugewandten Seite ein Übergangsbereich, beispielsweise eine Schulter, bei der Messung der Länge unberücksichtigt bleiben. Wiederum alternativ oder zusätzlich kann auf der von der Mutter abgewandten Seite eine Bördelung bei der Messung der Länge der Dehnhülse unberücksichtigt bleiben.

Beispielsweise kann die Länge der Dehnhülse entlang der Achse des Befestigungselements das 1,0-fache bis 10-fache, vorzugsweise das 1-fache bis 5-fache, besonders bevorzugt das 2-fache bis 3-fache der Länge des Innengewindes betragen. Durch diese Ausgestaltung kann beispielsweise gewährleistet sein, dass die Dehnhülse eine ausreichende Länge aufweist, insbesondere um eine große Schraubenzusatzkraft aufnehmen zu können.

Die Dehnhülse kann insbesondere eine Länge entlang einer Achse des Befestigungselements aufweisen, welche mindestens das 0,5-fache, insbesondere mindestens das 1,0-fache, eines Durchmessers des Innengewindes beträgt, vorzugsweise mindestens das 1,5-fache. Unter einem Innendurchmesser des Innengewindes kann beispielsweise ein Nenndurchmesser des Innengewindes verstanden werden. Die Dehnhülse kann insbesondere eine Länge entlang einer Achse des Befestigungselements aufweisen, welche das 0,5-fache bis 6-fache eines Durchmessers des Innengewindes beträgt, vorzugsweise das 1,0-fache bis 5-fache und besonders bevorzugt das 2-fache. Unter einem Durchmesser des Innengewindes kann dabei allgemein beispielsweise ein Nenndurchmesser des Innengewindes verstanden werden, beispielsweise entsprechend einer metrischen oder nicht-metrischen Norm.

Die Mutter und die Dehnhülse können insbesondere eine durchgehende Bohrung ausbilden. Diese Bohrung kann koaxial zu einer Achse des Befestigungselements ausgebildet sein. Die Bohrung kann einen konstanten Durchmesser oder auch einen stufenweise oder kontinuierlich sich verändernden Durchmesser aufweisen. Insbesondere kann die Bohrung im Bereich der Dehnhülse einen größeren Durchmesser aufweisen als im Bereich der Mutter. Letzteres ermöglicht beispielsweise ein vereinfachtes Aufsetzen des Befestigungselements auf das Gewinde, beispielsweise das Gewinde einer Radschraube. Beispielsweise kann die Bohrung im Bereich der Dehnhülse einen Durchmesser aufweisen, welcher mindestens das 1,2-fache, vorzugsweise mindestens das 1,3-fache, eines Durchmessers der Bohrung im Bereich der Mutter beträgt. Beispielsweise kann die Bohrung im Bereich der Dehnhülse einen Durchmesser aufweisen, welcher das 1,2-fache bis 3-fache eines Durchmessers der Bohrung im Bereich der Mutter beträgt.

Das Befestigungselement kann insbesondere im Bereich der Mutter einen kleineren Außendurchmesser aufweisen als im Bereich der Dehnhülse. Sind Außenkonturen vorgesehen, beispielsweise im Bereich der Mutter, so kann der Außendurchmesser beispielsweise durch einen Äquivalentdurchmesser ersetzt werden. Beispielsweise kann das Befestigungselement im Bereich der Dehnhülse einen Außendurchmesser aufweisen, welcher mindestens das 1,2-fache eines Außendurchmessers des Befestigungselements im Bereich der Dehnhülse beträgt.

Der Druckteller kann ebenfalls einen größeren Außendurchmesser oder maximalen Außendurchmesser aufweisen als die Dehnhülse. So kann der Druckteller beispielsweise einen maximalen Außendurchmesser aufweisen, welcher mindestens das 1,2-fache eines Außendurchmessers der Dehnhülse beträgt.

Der Druckteller kann entlang einer Achse des Befestigungselements eine Höhe aufweisen, welche vorzugsweise maximal das 0,5-fache einer Länge der Dehnhülse entlang der Achse beträgt. Wie oben ausgeführt, kann der Druckteller insbesondere entlang der Achse einen konischen Verlauf aufweisen und/oder einen Verlauf, bei welchem sich ein Durchmesser, beispielsweise ein Innendurchmesser und/oder ein Außendurchmesser, des Drucktellers kontinuierlich oder stufenweise erhöht. Auf diese Weise kann der Druckteller beispielsweise eine Federwirkung in axialer Richtung entfalten. Auch andere Ausgestaltungen mit einer Federwirkung sind grundsätzlich denkbar.

Wie oben ausgeführt, ist das Befestigungselement vorzugsweise für große Schrauben ausgestaltet. So kann das Innengewinde beispielsweise mindestens einem M8-Gewinde entsprechen, vorzugsweise mindestens einem M10-Gewinde und besonders bevorzugt mindestens einem M12-Gewinde, beispielsweise ein M22-Gewinde oder ein M24-Gewinde. Auch nicht-metrische Gewinde sind grundsätzlich möglich, vorzugsweise mit einem Innendurchmesser von mindestens 8 mm, vorzugsweise mindestens 10 mm oder mindestens 12 mm.

Das Befestigungselement kann insbesondere vollständig oder teilweise aus Stahl hergestellt sein. So kann beispielsweise Stahl der Festigkeitsklasse 10 nach DIN 74361-3 verwendet werden. Der Druckteller kann aus demselben Material hergestellt sein, aus welchem auch die Mutter und/oder die Dehnhülse hergestellt sind, oder auch aus einem anderen Material. So kann beispielsweise für den Druckteller ein Material höherer Elastizität verwendet werden als für die Mutter und/oder die Dehnhülse. Auch die Verwendung desselben Materials ist jedoch grundsätzlich möglich. Das Befestigungselement kann weiterhin vollständig oder teilweise mit einer oder mehreren Beschichtungen versehen sein. So kann beispielsweise das Befestigungselement, insbesondere die Mutter und/oder die Dehnhülse, alternativ oder zusätzlich jedoch auch der Druckteller, ganz oder teilweise mit einem Überzug beschichtet sein, der einen Korrosionsschutz bietet, beispielsweise einem Zinklamellenüberzug. Auch andere Korrosionsschutzsysteme sind grundsätzlich möglich.

In einem weiteren Aspekt der vorliegenden Erfindung wird ein Verfahren zum Befestigen eines Rades an einem Fahrzeug vorgeschlagen. Dabei wird eine Mehrzahl an Befestigungselementen gemäß der vorliegenden Erfindung, beispielsweise gemäß einer oder mehreren der oben beschriebenen Ausgestaltungen und/oder gemäß einer oder mehreren der nachfolgend noch näher beschriebenen Ausführungsformen, verwendet, beispielsweise mindestens drei Befestigungselemente, vorzugsweise mindestens fünf Befestigungselemente. Das Verfahren umfasst die nachfolgend genannten Verfahrensschritte, welche vorzugsweise in der genannten Reihenfolge durchgeführt werden können, wobei jedoch grundsätzlich auch eine andere Reihenfolge und/oder eine vollständig oder teilweise zeitgleiche Durchführung der Verfahrensschritte möglich sind. Auch eine wiederholte, zeitlich parallele oder zeitlich überlappende Durchführung der Verfahrensschritte ist denkbar.

Das Verfahren umfasst die folgenden Schritte:
a) Aufsetzen des Rades auf einen Radträger des Fahrzeugs, wobei Stehbolzen oder Radschrauben des Fahrzeugs durch Felgenlöcher des Rades geschoben werden;
b) Aufsetzen der Befestigungselemente auf die Stehbolzen oder Radschrauben;
c) Verschrauben der Befestigungselemente mit den Stehbolzen oder Radschrauben, wobei ein Werkzeug an Außenkonturen der Muttern angesetzt wird und wobei die Druckteller der Befestigungselemente während des Verschraubens mit einer Felge des Rades zur Auflage kommen.

Das Fahrzeug kann beispielsweise ein Kraftfahrzeug oder auch ein Fahrzeug ohne eigenen Antrieb sein, beispielsweise ein Anhänger. Unter einem Radträger des Fahrzeugs ist dabei allgemein ein Element des Fahrzeugs zu verstehen, welches das Rad aufnimmt. Beispielsweise kann es sich hierbei um eine Fläche einer Achse des Rades handeln, auf welche das Rad direkt oder unter Zwischenschaltung eines oder mehrerer Zwischenelemente aufgesetzt wird. Unter Stehbolzen sind allgemein im Rahmen der vorliegenden Erfindung Gewindestangen oder Schrauben des Fahrzeugs zu verstehen, welche fest mit dem Fahrzeug verbunden sind und welche für eine Aufnahme des Rades auf dem Radträger und eine Fixierung des Rades an dem Radträger eingerichtet sind. Entsprechend sind unter Radschrauben im Rahmen der vorliegenden Erfindung Gewindestangen oder Schrauben zu verstehen, welche nicht fest mit dem Fahrzeug verbunden sind und welche für eine Aufnahme des Rades auf dem Radträger und eine Fixierung des Rades an dem Radträger eingerichtet sind. Unter Felgenlöchern sind allgemein Öffnungen in einer Felge des Rades zu verstehen, durch welche die Stehbolzen geschoben werden können. Das Werkzeug kann beispielsweise mindestens einen Schlüssel umfassen, beispielsweise einen Radmuttern- oder Radschraubenschlüssel, beispielsweise einen Sechskantschlüssel. Weiterhin können beispielsweise auch Drehmomentschlüssel oder andere Werkzeuge zum Verschrauben verwendet werden.

### Kurze Beschreibung der Figuren

Weitere Einzelheiten und Merkmale der Erfindung ergeben sich aus der nachfolgenden Beschreibung von bevorzugten Ausführungsbeispielen, insbesondere in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.

Im Einzelnen zeigen:
- Figur 1: ein Ausführungsbeispiel eines erfindungsgemäßen Befestigungselements in Draufsicht; und
- Figur 2: das Befestigungselement gemäß Figur 1 in einer teilgeschnittenen Darstellung von der Seite.

### Beschreibung der Ausführungsbeispiele

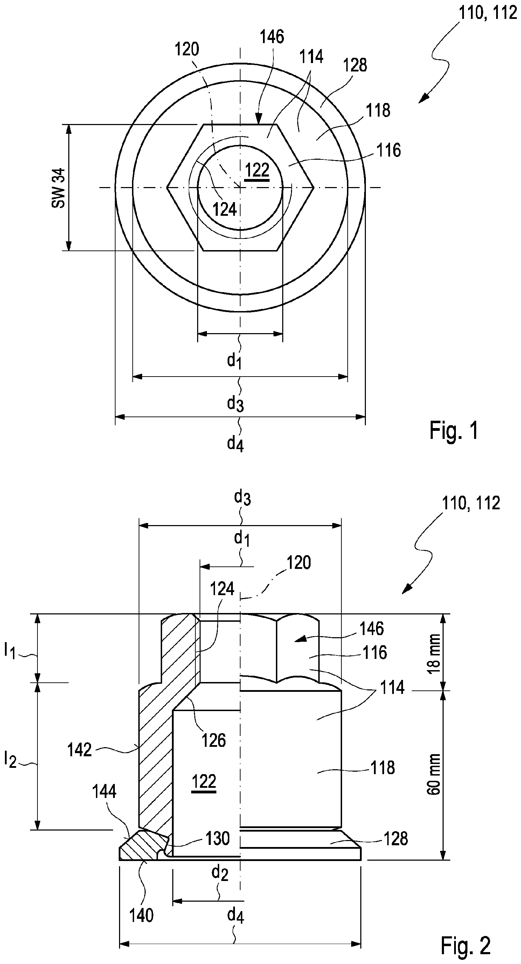

In den Figuren 1 und 2 ist ein Ausführungsbeispiel eines Befestigungselements 110 in Form einer Radmutter 112 gezeigt. Dabei zeigt Figur 1 eine Draufsicht auf das Befestigungselement 110, wohingegen Figur 2 eine teilgeschnittene Darstellung des Befestigungselements 110 in einer Schnittebene senkrecht zur Zeichenebene in Figur 1 zeigt. In Figur 2 sind exemplarisch Längen angegeben, welche die Erfindung jedoch nicht einschränken sollen und welche auch durch andere Maße ersetzt werden können.

Das Befestigungselement 110 umfasst einen Grundkörper 114, der unterteilt ist in eine Mutter 116 und eine Dehnhülse 118. Die Mutter 116 und die Dehnhülse 118 sind koaxial zu einer Achse 120 angeordnet und grenzen entlang der Achse 120 unmittelbar aneinander an. Der Grundkörper 114 mit der Mutter 116 und der Dehnhülse 118 ist einstückig ausgebildet und kann insbesondere aus einem Stahl hergestellt sein, beispielsweise einem Stahl der Festigkeitsklasse 10 nach DIN 74361-3. Weiterhin kann der Grundkörper 114, wie oben ausgeführt, mit einer Beschichtung versehen sein, beispielsweise als Korrosionsschutz.

Wie beispielsweise aus Figur 2 erkennbar, weist der Grundkörper 114 vorzugsweise eine durchgängige Bohrung 122 auf. Im Bereich der Mutter 116 weist diese Bohrung 122 einen Innendurchmesser d₁ auf, und im Bereich der Dehnhülse 118 einen Innendurchmesser d₂. Der Innendurchmesser d₁ der Mutter 114 kann beispielsweise einem Nenndurchmesser eines Innengewindes 124 der Mutter 116 entsprechen, beispielsweise einem metrischen oder nicht-metrischen Innengewinde, beispielsweise mit einem Nenndurchmesser ≥ M8. Beispielsweise können Radmuttern ≥ M10, ≥ M12, ≥ M20 oder sogar ≥ M22 hergestellt werden. Der Innendurchmesser d₂ der Gewinde-freien Dehnhülse 118 kann beispielsweise größer ausgestaltet sein als der Innendurchmesser d₁, beispielsweise um mindestens das 1,3-fache des Durchmessers d₁. In einem Übergangsbereich 126 zwischen der Dehnhülse 118 und der Mutter 116, welcher noch der Dehnhülse 118 zugerechnet werden kann, kann die Bohrung 122 beispielsweise einen konischen Verlauf aufweisen, wohingegen die Bohrung 122 ansonsten vorzugsweise zylindrisch ausgestaltet ist.

An dem von der Mutter 116 weg weisenden Ende der Dehnhülse 118 ist ein Druckteller 128 angeordnet. Der Druckteller 128 ist beispielsweise über eine Bördelung 130 oder eine Crimpverbindung drehbar und verliersicher mit der Dehnhülse 118 verbunden. Der Druckteller 128 kann beispielsweise eine Auflagefläche 140 aufweisen, mittels derer der Druckteller 128 auf eine Lagerfläche, beispielsweise eine Fläche einer Felge, aufgesetzt werden kann. Bei diesem Aufsetzen berührt vorzugsweise die Dehnhülse 118 die Felge nicht, so dass die Auflagefläche 140 nach unten in axialer Richtung in Figur 2 die am weitesten herausragende Fläche darstellt.

Die Dehnhülse 118 kann beispielsweise einen Außendurchmesser d₃ aufweisen, welcher exemplarisch bei 46 mm liegen kann. Auch andere Maße sind jedoch möglich. Der Druckteller 128 kann einen Außendurchmesser d₄ aufweisen, welcher vorzugsweise größer ist als der Außendurchmesser d₃ und welcher exemplarisch bei 53 mm liegen kann. Auch andere Ausgestaltungen sind jedoch möglich.

Die Mutter 116 weist in axialer Richtung beispielsweise eine Länge l₁ auf, welche sich insbesondere durch die Länge des Innengewindes 124 bestimmen kann. Die Dehnhülse 118 kann in axialer Richtung eine Länge l₂ aufweisen. Wie in Figur 2 dargestellt, kann diese Länge nach oben hin ab dem Ende des Innengewindes 124 berechnet werden. Nach unten hin kann die Länge der Dehnhülse 118 beispielsweise bis zum Beginn der Bördelung 130 definiert sein, so dass die Bördelung 130 selbst nicht mehr zur Länge der Dehnhülse 118 beiträgt. Alternativ könnte die Bördelung 130 jedoch noch zur Länge l₂ gerechnet werden. Beispielsweise kann die Länge l₁ 5 bis 25 mm betragen, beispielsweise 18 mm, wohingegen die Länge l₂ exemplarisch 20 bis 80 mm betragen kann, beispielsweise 60 mm. Auch andere Dimensionen sind jedoch möglich.
Um eine ausreichende Dehnlänge zur Verfügung zu stellen, ist es besonders bevorzugt, wenn die Länge l₂ der Dehnhülse 118 mindestens das 0,5-fache des Durchmessers d₁ des Innengewindes 124 der Mutter 116 beträgt, vorzugsweise mindestens das 1,0-fache und besonders bevorzugt mindestens das 1,5-fache. So kann die Länge l₂ beispielsweise das 0,5-fache bis 5-fache des Durchmessers d₁ betragen, vorzugsweise das 1,0-fache bis 6-fache und besonders bevorzugt das 2-fache. Alternativ oder zusätzlich kann die Länge l₂ der Dehnhülse 118 mindestens das 0,5-fache, insbesondere mindestens das 1,0-fache, der Länge l₁ des Innengewindes 124 der Mutter 116 betragen und/oder kann beispielsweise das 1,0-fache bis 10-fache, vorzugsweise das 1-fache bis 5-fache und besonders bevorzugt das 2-fache bis 3-fache der Länge l₁ betragen. Auch andere Dimensionierungen sind grundsätzlich möglich.

Die Dehnhülse 118 weist, wie in Figur 2 erkennbar, vorzugsweise einen überwiegend zylindrischen Verlauf auf, mit einer kreiszylindrischen Mantelfläche 142. Auch andere Konturen sind jedoch grundsätzlich möglich. Der Druckteller 128 hingegen weist vorzugsweise einen konischen Verlauf auf, beispielsweise mit einer konischen Mantelfläche 144. Auch andere Ausgestaltungen sind jedoch möglich.

Im Bereich der Mutter 116 weist das Befestigungselement 110 vorzugsweise eine Außenkontur 146 auf, welche das Ansetzen eines Werkzeugs ermöglicht. Exemplarisch kann es sich hierbei um einen Sechskant handeln, beispielsweise einen Sechskant nach metrischer oder nicht-metrischer Norm. Exemplarisch ist in Figur 1 ein Sechskant der Größe SW 34 angegeben.

Bei der Verwendung der Radmutter 112 kann ein Rad auf einen Radträger eines Fahrzeugs aufgesetzt werden, wobei Stehbolzen oder Radschrauben des Fahrzeugs durch Felgenlöcher des Rades geschoben werden. Anschließend kann die Radmutter 112 gemäß den Figuren 1 und 2 auf das Gewinde der Stehbolzen oder Radschrauben aufgesetzt werden und mit den Stehbolzen oder Radschrauben verschraubt werden. Insbesondere im Bereich der Nutzfahrzeuge, der landwirtschaftlichen Maschinen und der Baumaschinen, seien es Kraftfahrzeuge oder auch Anhänger, treten dabei aufgrund der dort üblichen Dimensionen erhebliche Belastungen auf. Diese Vorspannkraft in axialer Richtung kann durch die Dehnhülse 118 aufgenommen werden. Da in dem dargestellten Ausführungsbeispiel keinerlei Fuge zwischen der Mutter 116 und der Dehnhülse 118 auftritt, ist das dargestellte Befestigungselement 110 zudem sehr unanfällig gegenüber Verschmutzungen und Korrosion. Weiterhin ist der Befestigungsvorgang im Vergleich zu üblichen Befestigungsvorgängen mit mehrteiliger Ausgestaltung, beispielsweise unter Verwendung einer separaten Dehnhülse, vergleichsweise einfach.

### Bezugszeichenliste

- 110: Befestigungselement
- 112: Radmutter
- 114: Grundkörper
- 116: Mutter
- 118: Dehnhülse
- 120: Achse
- 122: Bohrung
- 124: Innengewinde
- 126: Übergangsbereich
- 128: Druckteller
- 130: Bördelung
- 140: Auflagefläche
- 142: Mantelfläche
- 144: konische Mantelfläche
- 146: Außenkontur

## Patentansprüche

1. Befestigungselement (110), insbesondere Radmutter (112), zum Aufschrauben auf ein Gewinde, umfassend eine Mutter (116) mit einem Innengewinde (124), weiterhin umfassend eine sich an die Mutter (116) axial anschließende Dehnhülse (118), wobei die Dehnhülse (118) Innengewinde-frei ausgestaltet ist und einstückig mit der Mutter (116) ausgebildet ist, weiterhin umfassend einen Druckteller (128), wobei der Druckteller (128) auf einer der Mutter (116) abgewandten Seite der Dehnhülse (118) angeordnet ist und wobei der Druckteller (128) drehbar verliersicher an der Dehnhülse (118) befestigt ist, wobei der Druckteller (128) in einer axialen Schnittebene parallel zu einer Achse (120) des Befestigungselements (110) einen konischen Verlauf oder einen gekrümmten Verlauf aufweist, wobei sich ein Querschnitt des Drucktellers (128) in einer axialen, von der Mutter (116) weg weisenden Richtung kontinuierlich oder stufenweise erweitert.

2. Befestigungselement (110) nach dem vorhergehenden Anspruch, wobei die Dehnhülse (118) eine kreiszylindrische Mantelfläche (142) aufweist.

3. Befestigungselement (110) nach einem der vorhergehenden Ansprüche, wobei der Druckteller (128) durch eine Bördelung (130) mit der Dehnhülse (118) verbunden ist.

4. Befestigungselement (110) nach einem der vorhergehenden Ansprüche, wobei die Dehnhülse (118) eine Länge entlang einer Achse des Befestigungselements (110) aufweist, welche mindestens das 0,5-fache eines Durchmessers des Innengewindes (124) beträgt.

5. Befestigungselement (110) nach einem der vorhergehenden Ansprüche, wobei die Dehnhülse (118) eine Länge entlang einer Achse des Befestigungselements (110) aufweist, welche das 0,5-fache bis 6-fache eines Durchmessers des Innengewindes (124) beträgt.

6. Befestigungselement (110) nach einem der vorhergehenden Ansprüche, wobei die Dehnhülse (118) eine Länge entlang einer Achse des Befestigungselements (110) aufweist, welche mindestens das 0,5-fache einer Länge des Innengewindes (124) der Mutter (116) entlang der Achse beträgt.

7. Befestigungselement (110) nach dem vorhergehenden Anspruch, wobei die Länge der Dehnhülse (118) entlang der Achse des Befestigungselements (110) das 1,0-fache bis 10-fache der Länge des Innengewindes (124) beträgt.

8. Befestigungselement (110) nach einem der vorhergehenden Ansprüche, wobei die Mutter (116) und die Dehnhülse (118) eine durchgehende Bohrung (122) ausbilden, wobei die Bohrung (122) im Bereich der Dehnhülse (118) einen größeren Durchmesser aufweist als im Bereich der Mutter (116).

9. Befestigungselement (110) nach einem der vorhergehenden Ansprüche, wobei der Druckteller (128) einen größeren Außendurchmesser aufweist als die Dehnhülse (118).

10. Befestigungselement (110) nach einem der vorhergehenden Ansprüche, wobei das Innengewinde (124) mindestens einem M8-Gewinde, vorzugsweise mindestens einem M12-Gewinde, entspricht.

11. Verfahren zum Befestigen eines Rades an einem Fahrzeug, wobei eine Mehrzahl an Befestigungselementen (110) gemäß einem der vorhergehenden Ansprüche verwendet wird, umfassend die folgenden Schritte:
a) Aufsetzen des Rades auf einen Radträger des Fahrzeugs, wobei Stehbolzen oder Radschrauben des Fahrzeugs durch Felgenlöcher des Rades geschoben werden;
b) Aufsetzen der Befestigungselemente (110) auf die Stehbolzen oder Radschrauben;
c) Verschrauben der Befestigungselemente (110) mit den Stehbolzen oder Radschrauben, wobei ein Werkzeug an Außenkonturen der Muttern (116) angesetzt wird und wobei die Druckteller (128) der Befestigungselemente (110) während des Verschraubens mit einer Felge des Rades zur Auflage kommen.

## Claims

1. Fastening element (110), in particular a wheel nut (112), to be screwed onto a thread, said fastening element comprising a nut (116) with an internal thread (124), additionally comprising an expansion sleeve (118) axially connected to the nut (116), wherein the expansion sleeve (118) is developed without an internal thread and is realized in one piece with the nut (116), additionally comprising a pressure plate (128), wherein the pressure plate (128) is arranged on a side of the expansion sleeve (118) remote from the nut (116) and wherein the pressure plate (128) is fastened so as to be captively rotatable on the expansion sleeve (118), wherein the pressure plate (128) comprises a conical development or a curved development in an axial section plane parallel to an axis (120) of the fastening element (110), wherein a cross section of the pressure plate (128) widens continuously or in steps in an axial direction pointing away from the nut (116).

2. Fastening element (110) according to the preceding claim, wherein the expansion sleeve (118) comprises a circular cylindrical lateral surface (142).

3. Fastening element (110) according to any one of the preceding claims, wherein the pressure plate (128) is connected to the expansion sleeve (118) by means of a flanging (130).

4. Fastening element (110) according to any one of the preceding claims, wherein the expansion sleeve (118) comprises a length along an axis of the fastening element (110) which is at least 0.5 times a diameter of the internal thread (124).

5. Fastening element (110) according to any one of the preceding claims, wherein the expansion sleeve (118) comprises a length along an axis of the fastening element (110) which is between 0.5 times and 6 times a diameter of the internal thread (124).

6. Fastening element (110) according to any one of the preceding claims, wherein the expansion sleeve (118) comprises a length along an axis of the fastening element (110) which is at least 0.5 times a length of the internal thread (124) of the nut (116) along the axis.

7. Fastening element (110) according to the preceding claim, wherein the length of the expansion sleeve (118) along the axis of the fastening element (110) is between 1.0 times and 10 times the length of the internal thread (124).

8. Fastening element (110) according to any one of the preceding claims, wherein the nut (116) and the expansion sleeve (118) form a continuous bore (122), wherein the bore (122) comprises a greater diameter in the region of the expansion sleeve (118) than in the region of the nut (116).

9. Fastening element (110) according to any one of the preceding claims, wherein the pressure plate (128) comprises a greater outside diameter than the expansion sleeve (118).

10. Fastening element (110) according to any one of the preceding claims, wherein the internal thread (124) corresponds to at least an M8 thread and preferably to at least an M12 thread.

11. Method for fastening a wheel on a vehicle, wherein a plurality of fastening elements (110) according to any one of the preceding claims is used, said method comprising the following steps:
a) placing the wheel onto a wheel carrier of the vehicle, wherein studs or wheel bolts of the vehicle are pushed through holes in the wheel rim;
b) placing the fastening elements (110) onto the studs or wheel bolts;
c) screw-connecting the fastening elements (110) to the studs or wheel bolts, wherein a tool is fitted on the outside contours of the nuts (116) and wherein the pressure plates (128) of the fastening elements (110) come to rest on a rim of the wheel during the screw-connection.

## Revendications

1. Élément de fixation (110), en particulier écrou de roue (112), destiné à être vissé sur un filetage, comprenant un écrou (116) avec un filetage intérieur (124), comprenant en outre une douille expansible (118) se raccordant axialement à l'écrou (116), la douille expansible (118) étant réalisée sans filetage intérieur et étant réalisée d'une seule pièce avec l'écrou (116), comprenant en outre une rondelle de pression (128), la rondelle de pression (128) étant disposée sur un côté de la douille expansible (118) opposé à l'écrou (116) et la rondelle de pression (128) étant fixée de manière rotative à la douille expansible (118) de manière imperdable, la rondelle de pression (128) présentant une allure conique ou une allure courbe dans un plan de coupe axial parallèlement à un axe (120) de l'élément de fixation (110), une section transversale de la rondelle de pression (128) s'élargissant en continu ou de manière étagée dans une direction axiale s'éloignant de l'écrou (116).

2. Élément de fixation (110) selon la revendication précédente, dans lequel la douille expansible (118) présente une surface d'enveloppe cylindrique circulaire (142).

3. Élément de fixation (110) selon l'une quelconque des revendications précédentes, dans lequel la rondelle de pression (128) est raccordée à la douille expansible (118) par un bordage (130).

4. Élément de fixation (110) selon l'une quelconque des revendications précédentes, dans lequel la douille expansible (118) présente une longueur le long d'un axe de l'élément de fixation (110) qui vaut au moins 0,5 fois un diamètre du filetage intérieur (124).

5. Élément de fixation (110) selon l'une quelconque des revendications précédentes, dans lequel la douille expansible (118) présente une longueur le long d'un axe de l'élément de fixation (110) qui vaut 0,5 fois à 6 fois un diamètre du filetage intérieur (124).

6. Élément de fixation (110) selon l'une quelconque des revendications précédentes, dans lequel la douille expansible (118) présente une longueur le long d'un axe de l'élément de fixation (110) qui vaut au moins 0,5 fois une longueur du filetage intérieur (124) de l'écrou (116) le long de l'axe.

7. Élément de fixation (110) selon la revendication précédente, dans lequel la longueur de la douille expansible (118) le long de l'axe de l'élément de fixation (110) vaut 1,0 fois à 10 fois la longueur du filetage intérieur (124).

8. Élément de fixation (110) selon l'une quelconque des revendications précédentes, dans lequel l'écrou (116) et la douille expansible (118) constituent un alésage continu (122), l'alésage (122) présentant dans la région de la douille expansible (118) un plus grand diamètre que dans la région de l'écrou (116).

9. Élément de fixation (110) selon l'une quelconque des revendications précédentes, dans lequel la rondelle de pression (128) présente un plus grand diamètre extérieur que la douille expansible (118).

10. Élément de fixation (110) selon l'une quelconque des revendications précédentes, dans lequel le filetage intérieur (124) correspond au moins à un filetage M8, de préférence au moins à un filetage M12.

11. Procédé de fixation d'une roue sur un véhicule, une pluralité d'éléments de fixation (110) selon l'une quelconque des revendications précédentes étant utilisée, comprenant les étapes suivantes :
a) pose de la roue sur un support de roue du véhicule, des boulons filetés ou des vis de roue du véhicule étant enfoncés à travers des trous de jante de la roue ;
b) pose des éléments de fixation (110) sur les boulons filetés ou les vis de roue ;
c) vissage des éléments de fixation (110) avec les boulons filetés ou les vis de roue, un outil étant appliqué contre les contours extérieurs des écrous (116) et les rondelles de pression (128) des éléments de fixation (110) venant en appui pendant le vissage avec une jante de la roue.
